**Europäisches Patentamt**

**European Patent Office**

**Office européen des brevets**

(11) Veröffentlichungsnummer : **0 410 088 B1**

# (12) EUROPÄISCHE PATENTSCHRIFT

(45) Veröffentlichungstag der Patentschrift :
**02.12.92 Patentblatt 92/49**

(51) Int. Cl.$^5$ : **B23K 9/073,** B23K 9/10,
H02M 7/219

(21) Anmeldenummer : **90108697.5**

(22) Anmeldetag : **09.05.90**

(54) **Schweiss- oder Plasmaschneidgerät mit stabilisierter Zwischenkreisspannung.**

(30) Priorität : **26.07.89 DE 3924638
10.11.89 DE 3937435**

(43) Veröffentlichungstag der Anmeldung :
**30.01.91 Patentblatt 91/05**

(45) Bekanntmachung des Hinweises auf die
Patenterteilung :
**02.12.92 Patentblatt 92/49**

(84) Benannte Vertragsstaaten :
**AT BE CH DE DK ES FR GB GR IT LI LU NL SE**

(56) Entgegenhaltungen :
**DE-A- 3 539 027
US-A- 4 564 742**

(73) Patentinhaber : **EMW ELEKTROWERK
MÜNDERSBACH
VERWALTUNGSGESELLSCHAFT mbH
Forststrasse 7-13
W-5419 Mündersbach/Westerwald (DE)**

(72) Erfinder : **Der Erfinder hat auf seine Nennung
verzichtet**

(74) Vertreter : **Cohausz & Florack Patentanwälte
Postfach 14 01 61 Schumannstrasse 97
W-4000 Düsseldorf 1 (DE)**

## Beschreibung

Die Erfindung betrifft ein Schweiß- oder Plasmaschneidgerät bestehend aus einem wechselstromgespeisten Gleichrichter, der einen Zwischenkreis zur Versorgung eines primärseitig wechselweise getakteten Stromwandlers speist, wobei zur Taktung des Stromwandlers von einer Steuereinheit ansteuerbare elektronische Schalter vorgesehen sind, und aus mindestens einem vorzugsweise zwei sekundärseitig des Stromwandlers vorgesehenen, wechselweise stromführenden, eine Gleichrichterdiode enthaltenden Strompfaden, welche über eine Drossel mit dem Verbraucher verbunden sind.

Ein Gerät der eingangs genannten Art ist aus der US-PS 4564742 bekannt. Bei diesem Gerät wird durch die wechselweise Ansteuerung des Stromwandlerpaares mit sich innerhalb einer Periodendauer zeitlich nicht überlappenden Impulsen eine erhöhte Aussteuerbarkeit erreicht, da durch die gegenläufige Ansteuerung der eine der beiden Stromwandler stets in der Strompause des anderen betrieben wird. Hierdurch steht für den Betrieb mit maximaler Leistung die gesamte Periodendauer zur Verfügung. Zur Ansteuerung des Stromwandlerpaares werden bei der bekannten Vorrichtung steuerbare Halbleiterschalter eingesetzt. Diese müssen hinsichtlich ihrer Spannungsfestigkeit mit einer bestimmten Reserve ausgestattet werden, welche durch die vergleichsweise großen Toleranzen der Spannung des Wechsel- bzw. Drehstromnetzes bedingt sind.

Andererseits wirken sich die Netzspannungsschwankungen und dadurch bedingt die Schwankungen der Gleichspannung am Zwischenkreis ungünstig auf den Bearbeitungsprozeß, zu dessen Versorgung das Gerät dient, aus.

Daher liegt der vorliegenden Erfindung die Aufgabe zugrunde, die durch die Netzspannungsschwankungen bedingten Einflüsse auf den Schweiß- bzw. Plasmaschneidprozeß herabzusetzen.

Diese Aufgabe wird erfindungsgemäß dadurch gelöst, daß dem Gleichrichter von einer Spannungseinrichtung ansteuerbare Schalter derart zugeordnet sind, daß durch die Einschaltdauer der Schalter die Höhe der Zwischenkreisspannung auf einen vorgebbaren Sollwert einstellbar ist.

Die erfindungsgemäße vorgesehene Stabilisierungsschaltung für die Zwischenkreisspannung läßt sich mit vergleichsweise geringem elektronischen Aufwand durch einen Regelkreis realisieren. Als Istwert für den Spannungsregelkreis wird die am Zwischenkreis anliegende Gleichspannung gemessen und auf einen von außen vorgebbaren Sollwert geregelt. Die am Ausgang des Regelkreises anliegende Gleichspannung gleicht somit die Toleranzen in der Höhe der Netzspannung vollkommen aus. Somit brauchen die Halbleiterschalter für die primärseitige Ansteuerung des Stromwandlerpaares nicht mehr auf die höchste mögliche Netzspannung überdimensioniert zu werden. Darüber hinaus kann die Qualität des Bearbeitungsvorganges deutlich verbessert werden, da die am Ausgang des erfindungsgemäßen Gerätes für den Prozeß zur Verfügung stehende Spannung entsprechend stabil ist.

Gemäß einer ersten bevorzugten Ausführungsform der Erfindung ist vorgesehen, daß der ansteuerbare Schalter derart parallel zum Gleichrichter angeordnet ist, daß er mit dem gemeinsamen Anschlußpunkt einer dem Zwischenkreis vorgeordneten Reihenschaltung aus einer weiteren Drossel und einer Diode verbunden ist. Bei dieser Variante der Stabilisierungsschaltung liegt der besondere Vorteil darin daß die am Zwischenkreis zur Verfügung stehende stabilisierte Gleichspannung gleich oder größer ist als die am Ausgang des Gleichrichters abgegebene den Netzspannungsschwankungen unterworfene Gleichspannung. Diese Variante eignet sich also für solche Betriebsweisen, bei denen die Zwischenkreisspannung z.B. größer sein soll als 500 V.

In einer anderen Variante der Erfindung ist vorgesehen, daß der ansteuerbare Schalter in einer in Reihe zum Gleichrichter liegenden Reihenschaltung mit einer weiteren Drossel angeordnet ist, wobei am gemeinsamen Anschlußpunkt von Schalter und Drossel eine parallel zum Gleichrichter liegende Diode angeschlossen ist. Bei dieser Stabilisierungsschaltung liegt am Zwischenkreis eine stabilisierte Gleichspannung an, deren Höhe unterhalb der vom Gleichrichter abgegebenen schwankenden Gleichspannung ist. Somit kann man beispielsweise einen für eine niedrige Spannung ausgelegten Stromwandler mit einer entsprechend höheren Netzspannung betriebssicher versorgen.

Eine dritte Variante der Erfindung sieht vor, daß den Gleichrichterdioden des Gleichrichters jeweils ein ansteuerbarer Schalter parallel geschaltet ist.

Durch die Taktzeit der jeweiligen Schalter innerhalb der Gleichrichterbrücke kann ebenfalls auf die am Ausgang des Gleichrichters anliegende Gleichspannung eingewirkt werden, ohne daß es weiterer elektronischer Hilfsmittel bedarf.

Weitere bevorzugte Ausführungsformen sind in den Unteransprüchen 4 und 5 angegeben.

Die Erfindung wird im folgenden anhand einer drei Ausführungsbeispiele darstellenden Zeichnung erläutert. Dabei zeigen

Fig.1 ein erstes Ausführungsbeispiel der Erfindung,

Fig.2 ein zweites Ausführungsbeispiel der Erfindung und

Fig.3 ein drittes Ausführungsbeispiel der Erfindung.

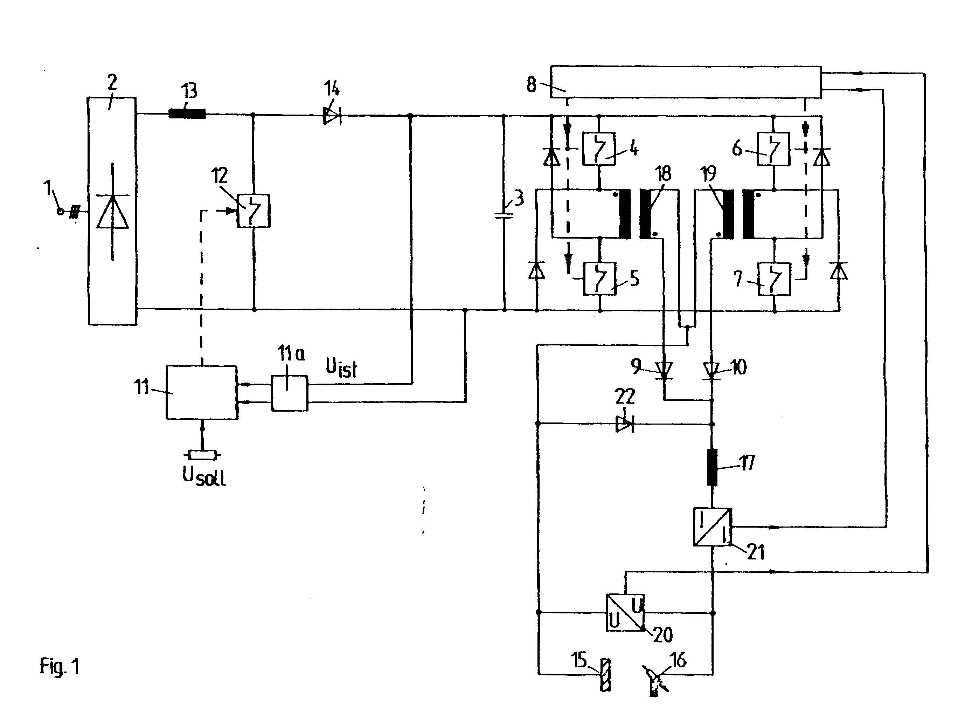

Figur 1 zeigt einen von einem Dreiphasennetz 1 gespeisten Gleichrichter 2, welcher über eine Stabilisierungsschaltung einen einen Zwischenkreis bildenden Kondensator ansteuert, der seinerseits einen ihm nachgeordneten Wechselrichter versorgt. Der Wechselrichter besteht aus zwei getrennten Stromwandlern 18,19, die über Halbleiterschalter 4,5,6,7, die von einer Steuereinrichtung 8 getaktet werden, derart angesteuert werden, daß primärseitig wechselweise sich nicht überlappende Ströme in die Stromwandler 18,19 fließen. Die Freilaufdioden im Primärkreis bewirken die Abmagnetisierung der Stromwandler 18,19 während der Zeitintervalle, in denen die Wandler 18,19 jeweils nicht durch die ihnen zugeordneten Halbleiterschalter 4,5 bzw. 6,7 getaktet werden.

Die Sekundärseiten der Stromwandler 18,19 weisen zwei jeweils eine Zuleitung für einen Stromkreis bildende Anschlüsse und einen gemeinsamen Mittenanschluß für die Rückleitung des Stromes auf. Innerhalb der beiden Stromkreise befinden sich jeweils eine Gleichrichterdiode 9,10, um die jeweils in der Sekundärwicklung der Stromwandler 18,19 induzierte Spannung gleichzurichten.

Die beiden Sekundäranzapfungen sind an einem gemeinsamen Punkt miteinander verbunden und von dort aus über eine Drossel 17 mit einem Anschluß 16 der Schweißelektrode verbunden, deren anderer Anschluß 15 mit der Mittelanzapfung gekoppelt ist. Parallel zur Schweißelektrode 16,15 ist eine Freilaufdiode 22 im Sekundärkreis angeordnet. Zur Messung des in die Schweißelektrode 15,16 hereinfließenden Stromes ist eine Meßeinrichtung 21 vorgesehen, während die weitere Meßeinrichtung 20 die an der Schweißelektrode 16,15 anliegende Spannung detektiert. Beide Meßeinrichtungen 21,22 wirken auf die Steuereinrichtung 8, wodurch ein rückgekoppelter Regelkreis entsteht.

Der bislang beschriebene Schaltungsaufbau ist den Figuren 1 bis 3 gemeinsam. Die Figuren 1 bis 3 unterscheiden sich jedoch durch die dem Zwischenkreis 3 vorgeordnete Schaltung, mittels der die am Zwischenkreis 3 anliegende Gleichspannung zur Ausschaltung der Spannungsschwankungen des Wechselstromnetzes 1 stabilisiert wird.

Bei der in Figur 1 dargestellten ersten Variante der erfindungsgemäßen Stabilisierung liegt eine Reihenschaltung aus einer weiteren Drossel 13 und einer Diode 14 zwischen dem Gleichrichter 2 und dem Zwischenkreis 3 war.

Am gemeinsamen Anschluß von weiterer Drossel 13 und Diode 14 ist parallel zum Gleichrichter 2 bzw. Zwischenkreis 3 ein Halbleiterschalter 12 angeordnet, welcher von einer Spannungsregeleinrichtung 11 angesteuert wird, der von einer Spannungsmeßeinrichtung 11a und einem Sollwertgeber Eingangssignale erhält. Die Meßeinrichtung 11a mißt die am Zwischenkreis 3 anliegende Gleichspannung. Mittels der beschriebenen Schaltung wird die Taktfrequenz des Schalters 12 derart gesteuert, daß die am Zwischenkreis 3 anliegende Gleichspannung der vom Sollwertgeber vorgegebenen Gleichspannung entspricht.

Diese Schaltung hat die Eigenschaft, daß die am Zwischenkreis anliegende stabilisierte Gleichspannung stets höher ist als die vom Gleichrichter 2 abgegebene nichtstabilisierte Gleichspannung.

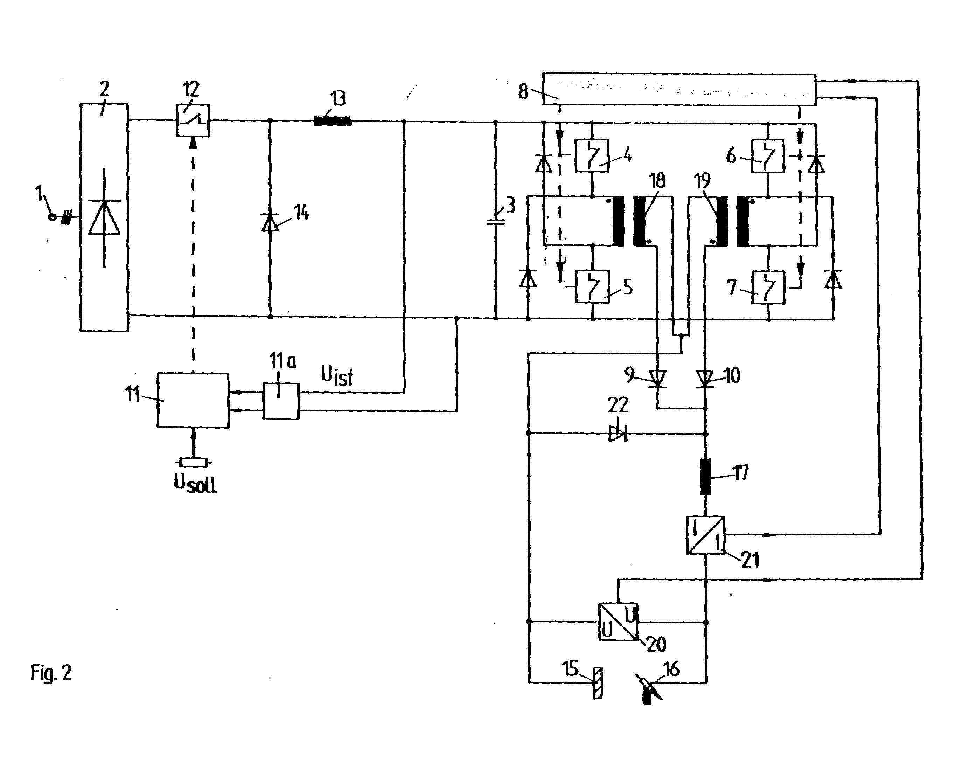

Bei der in Figur 2 dargestellten zweiten Ausführungsform der Erfindung liegt der gesteuerte Halbleiterschalter 12 in Reihe mit der weiteren Drossel 13 im Verbindungszweig zwischen Gleichrichter 2 und Zwischenkreis 3. Die Diode 14 liegt hierbei parallel zum Gleichrichter 2 bzw. Zwischenkreis 3 und ist mit dem gemeinsamen Anschlußpunkt von Halbleiterschalter 12 und weiterer Drossel 13 verbunden. Die Ansteuerung des Halbleiterschalters 12 erfolgt hierbei ebenfalls über die Meßeinrichtung 11a für die Zwischenkreisspannung und den Regler 11. Diese Schaltung eignet sich für solche Anwendungen, bei denen die geforderte stabilisierte Zwischenkreisspannung niedriger sein soll als die vom Gleichrichter 2 abgegebene unstabilisierte Spannung. Durch Variation der Taktfrequenz des Schalters 12 läßt sich die am Ausgang des Regelkreises abgegebene Gleichspannung dem vorgegebenen Sollwert annähern.

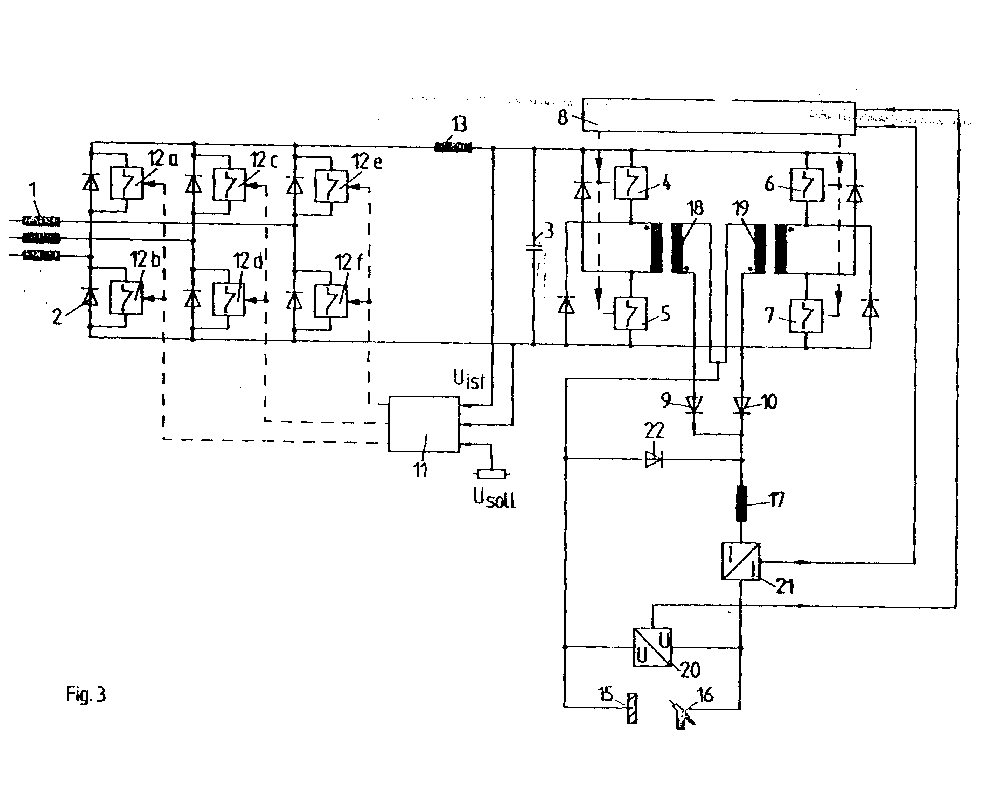

Die in Figur 3 dargestellte dritte Alternative zeigt, daß jeweils parallel zu den üblicherweise im Gleichrichter 2 vorgesehenen sechs Gleichrichterdioden gesteuerte Halbleiterschalter 12a - 12f vorgesehen sind, deren Steuerung durch den Regler 11 erfolgt. Die Halbleiterschalter 12a-12f werden jeweils paarweise so betrieben, daß die am Ausgang des Gleichrichters durch die weitere Drossel geglättete Gleichspannung dem gewünschten Sollwert entspricht. Auch hierdurch wird eine Überhöhung bzw. Erniedrigung der abgegebenen Gleichspannung bedingt durch die Netzspannungsschwankungen vermieden.

## Patentansprüche

1. Schweiß- oder Plasmaschneidgerät bestehend aus einem wechselstromgespeisten Gleichrichter (2), der einen Zwischenkreis (3) zur Versorgung eines primärseitig wechselweise getakteten Stromwandlers (18,19) speist, wobei zur Taktung des Stromwandlers (18,19) von einer Steuereinheit (8) ansteuerbare elektronische Schalter (4,5,6,7) vorgesehen sind, und aus mindestens einem insbesondere zwei sekundärseitig des Stromwandlers (18,19) vorgesehenen, wechselweise stromführenden, eine Gleichrichterdiode (9,10) enthaltenden Strompfaden, welche über eine Drossel (17) mit dem Verbraucher (15,16) verbunden sind, **dadurch gekennzeichnet,** daß dem Gleichrichter (2) von einer Spannungsregeleinrichtung (11) ansteuerbare Schalter (12,12a,12b,12c,12d, 12e,12f) derart zugeordnet sind, daß durch die Einschaltdauer der Schalter (12,12a,12b,12c, 12d,12e,12f) die Höhe der Zwischenkreisspannung auf einen vorgebbaren Sollwert einstellbar i2.

Schweiß- oder Plasmaschneidgerät nach Anspruch 1,
**dadurch gekennzeichnet,** daß der ansteuerbare Schalter (12) derart parallel zum Gleichrichter (2) angeordnet ist, daß er mit dem gemeinsamen Anschlußpunkt einer dem Zwischenkreis (3) vorgeordneten Reihenschaltung aus einer weiteren Drossel (13) und einer Diode (14) verbunden ist.

3. Schweiß- oder Plasmaschneidgerät nach Anspruch 1
**dadurch gekennzeichnet,** daß der ansteuerbare Schalter (12) in einer in Reihe zum Gleichrichter (2) liegenden Reihenschaltung mit einer weiteren Drossel (13) angeordnet ist, wobei am gemeinsamen Anschlußpunkt von Schalter (12) und Drossel (13) eine parallel zum Gleichrichter (2) liegende Diode (14) angeschlossen ist.

4. Schweiß- oder Plasmaschneidgerät nach Anspruch 1,
**dadurch gekennzeichnet,** daß den Gleichrichterdioden des Gleichrichters (2) jeweils ein ansteuerbarer Schalter (12a-12f) parallel geschaltet ist.

5. Schweiß- oder Plasmaschneidgerät nach einem der Ansprüche 1 bis 4
**dadurch gekennzeichnet,** daß die ansteuerbaren Schalter (12,12a -12f) bipolare Transistoren sind.

6. Schweiß- oder Plasmaschneidgerät nach einem der Ansprüche 1 bis 5,
**dadurch gekennzeichnet,** daß die ansteuerbaren Schalter IGBTs sind.

**Claims**

1. Welding or plasma cutting device consisting of an AC powered rectifier (2) feeding into an intermediate circuit (3) to power a current transformer (18,19) alternately pulsed on the primary side, whereby the pulsing of the current transformer (18,19) is accomplished by selectable electronic switches (4,5,6,7) commanded by a controller (8), and of a minimum of one, but more particularly two alternately conducting current paths, each provided with an integral rectifying diode (9,10), on the secondary side of the current transformer (18,19) and which are connected to the user (15,16) through an inductance (17),
**characterized in that**
selectable switches (12,12a,12b,12c,12d,12e, 12f) are associated with the rectifier (2) such that the switch on time of the switches (12,12a,12b, 12c,12d,12e,12f) may be sequenced by a voltage controller (11) to set the voltage level of the intermediate circuit to a given command value.

2. Welding or plasma cutting device according to Claim 1,
**characterized in that**
the selectable switch (12) is connected in parallel to the rectifier (2) at a common connection terminal of a series circuit comprising a further inductance (13) and a diode (14), arranged prior to the intermediate circuit (3).

3. Welding or plasma cutting device according to Claim 1,
**characterized in that**
the selectable switch (12) is connected in series between the rectifier (2) and the further inductance (13) whereby a diode (14) is connected in parallel to the rectifier (2) at the common terminal between the switch (12) and the reactor (13).

4. Welding or plasma cutting device according to Claim 1,
**characterized in that**
the rectifying diodes of the rectifier (2) each have a selectable switch (12a-12f) connected in parallel.

5. Welding or plasma cutting device according to Claim 1 through 4,
**characterized in that**
the selectable switches (12,12a-12f) are bipolar transistors.

6. Welding or plasma cutting device according to Claim 1 through 5,
**characterized in that**
the selectable switches are IGBTs.

**Revendications**

1. Dispositif à souder ou à couper au jet de plasma comprenant un redresseur (2) alimenté en courant alternatif dont la sortie est branché sur un circuit intermédiaire qui alimente un transformateur de courant (18,19) rythmé en alternance sur le côté primaire, le rythme pour le transformateur de courant (18,19) étant fourni au moyen de commutateurs électroniques sélectables (4,5,6,7) commandés par un régulateur (8), ainsi que d'au moins une, plus spécifiquement de deux voies de courant conduisant en alternance, chacune munie d'une diode redresseur (9,10), sur le côté secondaire du transformateur de courant (18,19), et qui sont branchés sur l'utilisateur (15,16) à travers un inductance (17)
**caractérisé en ce que** des commutateurs sélectables (12,12a,12b,12c,12d,12e,12f) sont associés au redresseur (2) de manière que les commutateurs (12,12a,12b, 12c,12d,12e,12f) peuvent être cadencés par un régulateur de tension (11) pour donner une consigne de tension réglable au niveau du circuit intermédiaire.

2. Dispositif à souder ou à couper au jet de plasma selon Revendication 1,
**caractérisé en ce que** le commutateur sélectable (12) est branché en parallèle au redresseur (2) et connecté à la borne commune d'un circuit en série comprenant un autre inductance (13) et une diode (14), situé avant le circuit intermédiaire (3).

3. Dispositif à souder ou à couper au jet de plasma selon Revendication 1,
**caractérisé en ce que** le commutateur sélectable (12) est branché en série entre le redresseur (2) et un autre inductance (13) avec une diode (14) branché en parallèle au redresseur et connecté à la borne commune entre le commutateur (12) et l'étrangleur (13).

4. Dispositif à souder ou à couper au jet de plasma selon Revendication 1,
**caractérisé en ce que** les diodes du redresseur (2) ont chacune un commutateur sélectable (12a-12f) connecté en parallèle.

5. Dispositif à souder ou à couper au jet de plasma selon Revendications 1 à 4,
**caractérisé en ce que** les commutateurs sélectables (12, 12a-12f) sont des transistors bipolaires.

6. Dispositif à souder ou à couper au jet de plasma selon Revendications 1à 5,
**caractérisé en ce que** les commutateurs sélectables sont des IGBTs

Fig. 1

Fig. 2

Fig. 3

EP 0 410 088 B1